# EUROPEAN PATENT APPLICATION

(11) **EP 4 397 968 A1**
(43) Date of publication of application: **10.07.2024**
(21) Application number: 23150516.5
(22) Date of filing: 05.01.2023
(51) Int. Cl.: G01N 23/223

(54) **A HAND-HELD PORTABLE SPECTROMETER INSTRUMENT COMPRISING AN ERGONOMIC POINTING DEVICE**

(71) Applicant: Fondis Electronic, 78960 Voisins-le-Bretonneux (FR)
(72) Inventor: CROUZAT, Arnaud, 78960 Voisins-le-Bretonneux (FR); SMOLEK, Stephan, 78960 Voisins-le-Bretonneux (FR); KAMMERLOCH, Viktor, 78960 Voisins-le-Bretonneux (FR); RUPPERT, Michael, 78960 Voisins-le-Bretonneux (FR)
(74) Representative: Demulsant, Xavier

(57) **Abstract**

A hand-held spectrometer instrument comprising a hand grip (2), a display (3) screen for providing output of the instrument and a pointing device (5) for selecting output of the display screen, the instrument having a front side and a rear side, the rear side facing the operator holding the instrument with the hand grip, the pointing device (5) being placed on the rear side of the instrument, above the hand grip (2) and proximate to the hand grip.

## Description

### FIELD OF THE INVENTION

The invention relates to hand-held instruments, and in particular to a user interface for making user selections.

The invention relates more particularly to the field of portable X-ray fluorescence analyzers. In these analyzers, a device (X-ray tube or radioactive source) irradiates a target with X-rays, collects fluorescent radiation induced in said target by said X-rays and draws conclusions about the characteristics of said target, on the basis of the intensity and frequency spectrum of the fluorescent radiation.

Common applications of X-ray fluorescence analysis include investigating the material composition of the target.

The X-ray source emits incident X-rays towards the target through a window located at the front end. Fluorescent X-rays that originate in the irradiated target enter the measurement head through the window and hit a detector.

An analyzer processes the output signals produced by the detector and divides the energy levels of the detected X-ray photons into several energy subranges, by counts of the number of X-ray photons detected, to produce a graph depicting the X-ray spectrum of the sample.

In order to perform an X-ray fluorescence analysis of a target, a front end of the measurement head is pressed against a surface of the target. In some cases, the main interest is to determine how much the target contains some additive, pollutant or other minority constituent that can have important or potentially harmful effects, such as lead in paints or sulphur in liquid fuels.

In other cases, the analysis aims at determining the relative amounts of the main constituent materials, such as the different metals included in an alloy.

Using a portable handheld XRF analyzer, an operator can detect whether certain elements are present in sample, for use in such applications as, inter alia, security and law enforcement, environmental applications, artistic and historic works, biomedical and pharmaceutical applications, process chemistry.

Portable x-ray fluorescent (XRF) and optical emission spectrographic (OES) are used throughout the world for determining elemental and chemical compositions of samples, such as metals, soils and plastics.

In one common application, such instruments are used in metal recycling facilities to facilitate sorting pieces of scrap metal. For example, ferrous metals may be separated from nonferrous metals.

In other common applications, such instruments are used to analyze, identify or certify elemental concentrations or chemical compositions of materials. For example, such instruments are used to quantify the amount of gold in jewelry; identify plastics that have amounts of toxic elements; or certify soil that has less than a predetermined amount of a toxic chemical.

### BACKGROUND OF THE INVENTION

This background section is intended to introduce the reader to various aspects of art that may be related to various aspects of the present disclosure.

This discussion is believed to be helpful in providing the reader with background information to facilitate a better understanding of the various aspects of the present disclosure.

Accordingly, it should be understood that these statements are to be read in this light, and not as admissions of prior art.

Portable handheld X-ray fluorescence analyzers are performing fast analyses and have complicated menu structures with expanded modes for analysis, utilities and data storage.

In some cases, results of these analyses are stored in the instruments or archived in company databases, sometimes with user-entered identifying information, such as time and date of analysis, instrument operator's name.

Portable x-ray fluorescent (XRF) instruments commonly have a display screen, e.g. a LCD display, having a dimension of a few centimeters. The display screen is small and approaches the size of a smart phone. In that case, few icons are supported on the display, requiring the user to flip through more screens to reach any particular feature. This can be particularly cumbersome when the instrument is deployed in a hazardous or an industrial environment such as one where protective clothing is required.

US 2015/0286299 (Bacon, 2015) discloses a hand-held instrument including a sample probe for performing an evaluation of a sample, a display for providing output of the instrument, and a pointing device for selecting output of the display, the pointing device configured for facilitating the selecting while holding the instrument. The pointing device is disposed on the pistol grip and comprises a scroll wheel, disposed proximate to a trigger for the instrument. The scroll wheel is configured to receive user input from a trigger finger of the user. The scroll wheel may be scrolled to the left, to the right, and may be depressed. By moving the scroll wheel to the left or to the right, a user may move a cursor or highlighted feature on the display screen between a variety of user options (such as menu items, icons). Once an appropriate option has been selected, the scroll wheel may be depressed to select the option. The scroll wheel is disposed near the handgrip, the user scrolling the scroll wheel with an index finger while maintaining the grip with the remaining fingers and palm of the hand. The scroll wheel may be implemented with a mechanical encoder, a magnetic encoder.

The pointing device disclosed in this prior art document is not ergonomic.

The scroll wheel is disposed proximate to a trigger of the instrument and there is a risk that the user press the trigger accidently instead of scrolling. There is also a risk that the user press the scroll wheel instead of pressing the trigger.

### SUMMARY OF THE INVENTION

It is the general object of the present disclosure to overcome the problems associated with the background art.

The foregoing and other objects of the present disclosure may be realized with a hand-held spectrometer instrument comprising a hand grip, a display screen for providing output of the instrument and a pointing device for selecting output of the display screen, the instrument having a front side and a rear side, the rear side facing the operator holding the instrument with the hand grip, the pointing device being placed on the rear side of the instrument, above the hand grip and proximate to the hand grip.

In some embodiments, the pointing device is placed under the display screen and is hidden from view for an observer looking at the display screen from the rear side of the instrument.

Advantageously, the pointing device comprises at least one of a touch pad, a trackball, a pointing stick, a scroll wheel.

In some embodiments, the pointing device comprises a four direction control pad, or eight direction control pad.

Advantageously, the hand held spectrometer comprises a trigger on the front side of the hand grip, the trigger providing for initiation of sampling and/or analysis with the instrument.

In various embodiments, the hand held spectrometer instrument comprises a sample probe configured for at least one of X-ray fluorescence (XRF) spectroscopy, laser induced breakdown spectroscopy (LIBS), Fourier transform infrared (FTIR) spectroscopy, near-infrared (NIR) spectroscopy and Raman spectroscopy. Advantageously, the hand held spectrometer instrument comprises a processor for controlling the instrument, the pointing device providing input for the processor, the input comprising a selection of one of a menu item, an icon, and a user option.

### BRIEF DESCRIPTION OF THE DRAWINGS

The above and other objects and advantages of the invention will become apparent from the detailed description of preferred embodiments, considered in conjunction with the accompanying drawings, in which:
- figure 1 is a perspective view of a hand-held test instrument, according to an embodiment, the hand-held instrument being viewed from the front side ;

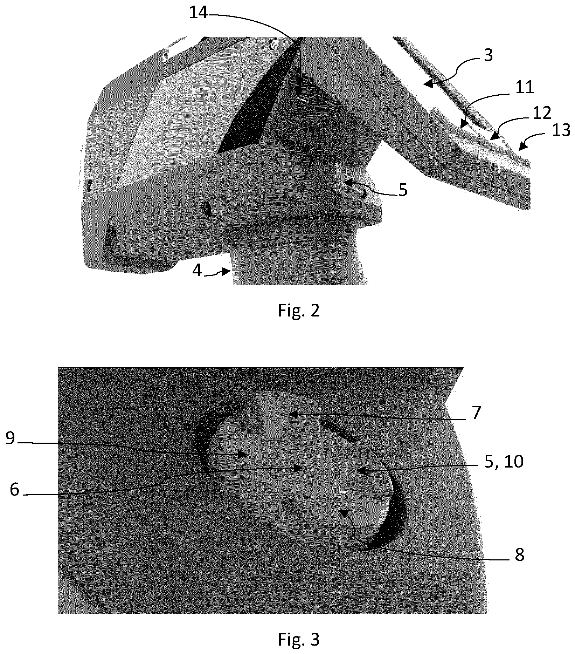

- figure 2 is a detailed perspective view of the rear side of the hand-held test instrument of figure 1;
- figure 3 is a detailed perspective view of the control pad of the hand-held instrument represented in figure 1 and 2.

### DETAILED DESCRIPTION

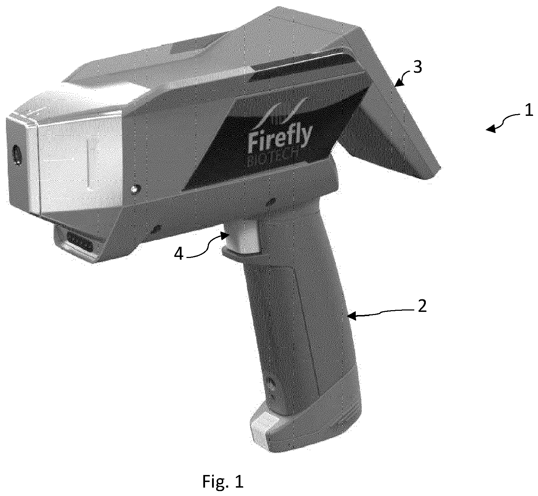

Referring now to figure 1, there is shown a hand-held instrument 1.

The instrument 1 provides a user with capabilities for field-based surveillance of a sample and sample analysis, performed by spectroscopy techniques.

These techniques may use X-ray fluorescence (XRF) spectroscopy, laser induced breakdown spectroscopy (LIBS), Fourier transform infrared (FTIR) spectroscopy, near-infrared (NIR) spectroscopy and/or Raman spectroscopy.

The instrument 1 may provide for collection of an X-ray or optical spectrum of absorption, emission, or Raman scattering from a solid, liquid or gas sample.

The instrument 1 may also be referred to as a hand-held spectrometer.

A general presentation of these spectroscopy techniques and a state of the art of the applications of portable spectrometers can be found in Crocombe et al. (Portable spectroscopy and spectrometry II, 2021, ISBN 978-1119636403*).*

When the instrument 1 is deployed as an XRF device, the instrument 1 emits gamma or X-rays, and detects secondary emissions from a target. Analyses of the secondary emissions provide for elemental identification of the target material.

LIBS is a rapid chemical analysis technology that uses a short laser pulse to create a micro-plasma on the sample surface. Theoretical aspects and the state of the art applications of LIBS are presented by Musazzi et al. (Laser-Induced Breakdown Spectroscopy, 2014, ISBN 978-3-642-45084-6)*.*

When the instrument 1 is deployed as a LIBS device, the instrument 1 emits pulses of optical laser radiation, and detects secondary emissions from a target. Analyses of the secondary emissions provide for elemental identification of the target material.

Portable Fourier-transform infrared spectrometers can be used for the in situ analysis of materials, e.g. found at environmental pollution incidents or the detection of counterfeit medicine. Portable FTIR can also be used to identify and compare items such as paint or explosives for forensic applications. Compared to laboratory spectroscopy, on-site spectral analysis with portable instruments can further increase the benefits of soil spectroscopy by minimizing the number of soil samples that have to be collected and transported to the lab, as well as the requirement for extensive sample pre-treatment.

When the instrument 1 is deployed as an FTIR device, the instrument 1 illuminates a sample with many frequencies of light at once, and measures how much of that beam is absorbed by the sample. The beam is modified to contain a different combination of frequencies, giving a second data point. This process is repeated many times. Afterwards, a processor on board the instrument 1 takes the collected data to estimate absorption at each wavelength. Correlations between absorption data and characteristics for known materials are then made an output to the user.

When the instrument 1 is deployed as an NIR device, the instrument 1 illuminates a sample with near-infrared frequencies of light. When deployed as an NIR device, the instrument 1 includes a source, a detector, and a dispersive element to allow the intensity at different wavelengths to be recorded. NIR spectrometers are used to evaluate food for their chemical contents such as moisture and proteins.

Raman spectrometer is based on vibrational spectroscopy. Portable Raman spectrometer can be used e.g. for in situ geological materials, or identity illicit drugs, explosives, hazardous chemicals. For example, portable Raman spectrometer is able to detect acetonitrile, benzene, xylene, ketamine.

When the instrument 1 is deployed as a Raman scattering device, the instrument 1 illuminates the sample with a beam of light. When photons are scattered from an atom or molecule in the sample, a small fraction of the scattered photons are scattered by an excitation. These Raman scattered photons have a frequency different from, and usually lower than, that of the incident photons. The instrument 1 provides resources for collecting an optical signal associated with the Raman scattering, comparing the optical signal with data tables, and outputting correlations to the user.

The instrument 1 includes a handgrip 2 for users to hold the instrument 1.

The instrument is provided with at least one display 3.

Generally, the display 3 provides the user with output.

The output may include configuration information, status of the instrument 1, semantic information (such as date, time, location information), as well as sample characterization, initiation, and analysis information.

The output may be static. For example, the output may provide identification of the instrument, service records.

The output may be dynamic. For example, the output may display data during collection, such as by displaying an accruing sample spectrum. Advantageously, the display 3 is provided as a touch sensitive screen, to enable user input through the display 3.

In an exemplary embodiment, the display 3 is provided as a liquid crystal display (LCD) with a capacitive overlay to enable touch capabilities.

Advantageously, the instrument 1 is provided with a capacitive pen to facilitate entries on the display 3, e.g. when operating a virtual keyboard. The virtual keyboard can also be operated via touch. Advantageously, the touch display allows touch operation throughout the use of the instrument, supported touch gestures being tap on control elements such as swipe for horizontal or vertical scrolling.

Advantageously, the instrument 1 includes at least one communications port.

The communications port may include a network interface such as an Ethernet, serial, parallel, USB.

The communications port may be used to provide for remote control, communication of data, receipt of output, shared processing, system backup.

In some embodiments, the communications port provides an interface to an external computer, such as a personal computer.

In some embodiments, a wireless communication channel may be established according to a wireless communication standard such as Bluetooth^{®} (e.g., Bluetooth^{®} Low Energy BLE as described in the Bluetooth Core Specification, v. 5.0, published December 6, 2016, by the Bluetooth® Special Interest Group, Kirkland, Washington) or according to one or more other standards (e.g., the Institute of Electrical and Electronics Engineers IEEE 802.11 family of standards known as Wi-Fi^{®}, mobile communications standards such as relating to 4G / Long Term Evolution LTE, or the IEEE 802.15.4 family of standards, as illustrative examples).

When the instrument 1 is connected to a personal computer, software installed on the computer may be used for control and enable rapid configuration of the instrument 1.

The instrument 1 includes an internal power supply (e.g., a battery), memory, a processor, a clock, data storage.

Generally, the processor is configured to receive input from user and to control the radiation sources, detection systems and analysis components.

The instrument 1 may include data libraries, substantial memory for data storage, calibration libraries.

Generally, the processor is configured to retrieve machine executable instructions stored in machine readable media, such as in the memory or the data storage, and provided for enabling the instrument 1 to perform a selected method for operation.

Advantageously, the software provided with the instrument 1 may include data tables, subroutines, links to external resources, as necessary or as deemed appropriate for enabling operation.

As one example, the instrument 1 may include at least one library. The at library may include for any given chemical, compound, element, information such as spectral properties, identity, dangerous good classification information, material safety data sheet information.

As another example, the instrument 1 may include language libraries for configuring a user interface according to a language of the user.

The software may provide output to display 3 including a variety of soft controls for configuring and operating the instrument 1.

Other output devices may further include a speaker, such as one configured to provide auditory output such as an alarm.

Additional input devices may include a microphone, such as one configured to receive voice commands from the user.

A user interface for controlling the instrument 1 includes a trigger 4. Among other things, trigger 4 provides for initiation of sampling and/or analysis with the instrument 1. Starting a measurement with the instrument 1 requires the use of the trigger 4.

The output may provide raw data, spectral data, or concentration data. A control pad 5 is placed on the rear side of the instrument 1, facing the user, whereas the trigger 4 is placed on the front side of the instrument 1, facing the material to be tested by the instrument 1.

Advantageously, as represented in the drawings, the control pad 5 is placed above the hand grip 2. Thus, when an operator is using the instrument 1 for a measurement, the hand of the operator holding the instrument 1 is placed around the hand grip 2 without any contact with the control pad 5.

In some embodiments, as represented in the drawings, the control pad 5 is placed below the display 3. Thus, when an operator is using the control pad 5, the hand of the operator holding the instrument 1 is placed around the hand grip 2 and the operator use the control pad 5 with his thumb. With the help of the control pad 5 interaction elements on the display 3 can be focused and activated by the user.

Advantageously, a colored frame highlights the currently focused element on the display 3.

Advantageously, the control pad 5 is hidden from view for an observer looking at the display 3 screen from the rear side of the instrument 1.

Advantageously, the control pad 5 has a center surface 6 and a plurality of command surfaces located around the center surface 6.

In the represented embodiment, the control pad is a four direction control pad and has four command surfaces 7, 8, 9, 10 positioned at the up, down, left, and right directions relative to the center surface 6. The command surfaces 7-10 are each oriented at an angle to the center surface 6 such that the center surface 6 is recessed relative to the command surfaces 7-10.

The control pad further includes four diagonal surfaces that are positioned angularly between the command surfaces 7-10 around the center surface 6. In some embodiments, the diagonal surfaces allows the user to press between the command surfaces 7-10 and the control pad is a height direction control pad.

In some embodiments, the control pad is configured with a mechanical detent to give the user a tactile feel as an aid to moving the control pad. In some embodiments, the control pad is a pressure sensitive touch pad. In other embodiments, the control pad is a capacitive touch pad. Selection of the given option using the control pad 5 may adjust functionality of the instrument 1, initiate sampling by the instrument 1, change a setting of the instrument 1, initiate communication by the instrument 1, or may enter a submenu and reveal additional operator options.

It should be noted that the control pad is one advantageous embodiment of an ergonomic operator pointing device.

Other pointing devices include, without limitation, a trackball, a pointing stick (e.g. operating by sensing applied force, by using a pair of resistive strain gauges).

Advantageously, the instrument 1 is provided with hardware buttons 11, 12, 13. In the represented embodiment, the hardware buttons 11-13 are located below the display 3. The operator can use the hardware buttons 11-13 to trigger the on-screen footer button actions, even when wearing protective gloves.

External input devices can be added for operation, for example a keyboard or a mouse, using external ports 14.

The instrument 1 can be controlled consistently throughout an application using hardware buttons 11-13, control pad 5, touch operation directly on the display 3 or external input device such as a pen, a barcode reader. Using a barcode reader, measurement results can be enriched with additional data.

The ergonomic user interface facilitate rapid operation of the instrument 1 while maintaining hand-held implementation (that is, holding the instrument 1 in hand).

## Claims

1. A hand-held spectrometer instrument (1) comprising a hand grip (2), a display (3) screen for providing output of the instrument (1) and a pointing device for selecting output of the display (3) screen, the instrument (1) having a front side and a rear side, the rear side facing the operator holding the instrument (1) with the hand grip (2), **characterized in that** the pointing device (5) is placed on the rear side of the instrument (1), above the hand grip (2) and proximate to the hand grip (2).

2. The hand-held spectrometer instrument (1) according to claim 1, **characterized in that** the pointing device (5) is placed under the display (3) screen and is hidden from view for an observer looking at the display (3) screen from the rear side of the instrument (1).

3. The hand-held spectrometer instrument (1) according to claim 1 or 2, **characterized in that** the pointing device comprises at least one of a touch pad, a trackball, a pointing stick, a scroll wheel.

4. The hand-held spectrometer instrument (1) according to any one of claims 1 to 3, **characterized in that** the pointing device (5) comprises a four direction control pad.

5. The hand-held spectrometer instrument (1) according to any one of claims 1 to 4, **characterized in that** if comprises a trigger (4) on the front side of the hand grip (3), the trigger (4) providing for initiation of sampling and/or analysis with the instrument (1).

6. The hand-held spectrometer instrument (1) according to any one of claims 1 to 5, **characterized in that** it comprises a sample probe configured for at least one of X-ray fluorescence (XRF) spectroscopy, laser induced breakdown spectroscopy (LIBS), Fourier transform infrared (FTIR) spectroscopy, near-infrared (NIR) spectroscopy and Raman spectroscopy.

7. The hand-held spectrometer instrument (1) according to any one of claims 1 to 6, **characterized in that** the instrument (1) comprises a processor for controlling the instrument, the pointing device (5) providing input for the processor, the input comprising a selection of one of a menu item, an icon, and a user option.
